# FASCICULE DE BREVET EUROPEEN

(11) **EP 2 178 761 B1**
(45) Date de publication et mention de la délivrance du brevet: **25.04.2012**
(21) Numéro de dépôt: 08828850.1
(22) Date de dépôt: 12.06.2008
(51) Int. Cl.: B64D 29/08, E05C 19/10

(54) **DISPOSITIF DE VERROUILLAGE**
SPERRVORRICHTUNG
LOCKING DEVICE

(30) Priorité: 20.08.2007 FR 0705918
(43) Date de publication de la demande: 28.04.2010
(73) Titulaire: Aircelle, 76700 Gonfreville L'Orcher (FR)
(72) Inventeur: LORE, Xavier, Raymond, Yves, F-76210 Beuzeville La Grenier (FR); JEAN, Michel, Christian, Marie, F-76290 Montivilliers (FR)
(74) Mandataire: Chevalier, Renaud Philippe
(86) Numéro de dépôt international: PCT/FR2008/000810
(87) Numéro de publication internationale: WO 2009/027588

(56) Documents cités:
- EP-A- 0 096 100
- EP-A- 1 336 707
- DE-A1-102004 063 239
- GB-A- 2 288 578
- US-A- 4 602 812
- US-B1- 6 325 428

## Description

La présente invention se rapport à une nacelle turboréacteur selon le préambule de la revendication 1.

Des exemples d'une nacelle de turboréacteur sont fourni par les documents EP 1 336 707 A et GB 2 288 578 A. Des dispositifs de verrouillage sont en particulier utilisés afin d'équiper une nacelle. La nacelle elle-même est destinée à équiper un aéronef.

Un aéronef est mu par plusieurs turboréacteurs logés chacun dans une nacelle abritant également un ensemble de dispositifs d'actionnement annexes liés à son fonctionnement et assurant diverses fonctions lorsque le turboréacteur est en fonctionnement ou à l'arrêt. Ces dispositifs d'actionnement annexes comprennent notamment un système mécanique d'actionnement d'inverseurs de poussée.

Une nacelle présente généralement une structure tubulaire comprenant une entrée d'air en avant du turboréacteur, une section médiane destinée à entourer une soufflante du turboréacteur, une section arrière pouvant abriter des moyens d'inversion de poussée et destinée à entourer la chambre de combustion du turboréacteur, et est généralement terminée par une tuyère d'éjection dont la sortie est située en aval du turboréacteur.

Les nacelles modernes sont souvent destinées à abriter un turboréacteur double flux apte à générer par l'intermédiaire des pâles de la soufflante en rotation un flux d'air chaud (également appelé flux primaire) issu de la chambre de combustion du turboréacteur.

Une nacelle présente généralement une structure externe, dite Outer Fixed Structure (OFS), qui définit, avec une structure interne concentrique, dite Inner Fixed Structure (IFS), un canal annulaire d'écoulement, encore appelé veine, visant à canaliser un flux d'air froid, dit secondaire, qui circule à l'extérieur du turboréacteur. Les flux primaire et secondaire sont éjectés du turboréacteur par l'arrière de la nacelle.

Chaque ensemble propulsif de l'avion est ainsi formé par une nacelle et un turboréacteur, et est suspendu à une structure fixe de l'avion, par exemple sous une aile ou sur le fuselage, par l'intermédiaire d'un pylône ou mât rattaché au turboréacteur ou à la nacelle.

La section arrière de la structure externe de la nacelle est usuellement formée d'une première et d'une deuxième demi-coquilles de forme sensiblement hémicylindrique, de part et d'autre d'un plan vertical longitudinal de symétrie de la nacelle, et montées mobiles de manière à pouvoir se déployer entre une position de travail et une position de maintenance en vue de donner accès au turboréacteur. Les deux demi-coquilles sont généralement montées pivotantes autour d'un axe longitudinal formant charnière en partie supérieure (à 12 heures) de l'inverseur. Les demi-coquilles sont maintenues en position de fermeture au moyen de dispositifs de verrouillage disposés au moins le long d'une ligne de jonction située en partie inférieure (à 6 heures).

La section arrière et la section médiane sont reliées par un cadre fixe. Le bord avant de la section arrière est une zone particulièrement sensible puisqu'elle présente des moyens de positionnement de chaque demi-coquille par rapport au cadre fixe. Ces moyens de positionnement sont, comme cela est connu en soi, formés par une nervure annulaire de profil en V et par une rainure de forme et de profil complémentaires. Lorsque les demi-coquilles sont en position rapprochées l'une de l'autre, chaque nervure est engagée dans le rainure correspondante de sorte que chaque demi-coquille est maintenu en position durant le vol de l'aéronef.

Afin de maintenir les demi-coquilles en position, un dispositif de verrouillage est prévu au niveau du bord avant de celles-ci, dans la zone de jonction inférieure au moins.

Lors du vol, les parois de la nacelle sont soumises à des contraintes importantes dues au passage d'air ou de gaz sous pression, de sorte qu'il est nécessaire de prévoir un dispositif de verrouillage additionnel visant à suppléer au dispositif de verrouillage précité en cas de rupture de celui-ci.

D'autres dispositifs de verrouillage sont prévus au niveau de la zone de jonction inférieure, en arrière du bord avant.

Toutefois, la zone avant de la section arrière permet de loger la tuyauterie équipant le turboréacteur. Ainsi, le dispositif de verrouillage équipant le bord avant est disposé à distance des autres dispositifs de verrouillage, de sorte qu'il est nécess aire de prévoir un autre dispositif de verrouillage au niveau du bord avant.

Du fait de l'encombrement de la tuyauterie précité, il devient très difficile d'équiper le bord avant avec un dispositif additionnel complet de verrouillage.

L'invention vise à remédier en tout ou partie à ces inconvénients en proposant une nacelle de turboréacteur avec un dispositif de verrouillage compact, répondant aux impératifs de sécurité durant le vol.

A cet effet, l'invention concerne une nacelle de turboréacteur

De cette manière, seul le premier crochet est soumis à des contraintes et à un phénomène de fatigue durant le vol de l'aéronef. En cas de rupture du premier crochet, le second crochet permet de remplir la même fonction que le premier. Un seul dispositif de verrouillage permet ainsi de réaliser à la fois la fonction de verrouillage classique et la fonction de sécurité, ce qui augmente la compacité de l'ensemble.

Une telle caractéristique permet en outre de sous dimensionner le second crochet, dit de sécurité, par rapport au premier de sorte que la compacité du dispositif de verrouillage est encore améliorée.

Selon une caractéristique de l'invention, le deuxième crochet est en retrait du premier d'une distance comprise entre 0,5 et 1,5 mm, préférentiellement de l'ordre de 1 mm.

Avantageusement, le système de verrouillage comporte des moyens d'actionnement conçus pour actionner simultanément le premier et le deuxième crochets.

Cette caractéristique permet de faciliter l'actionnement du dispositif de verrouillage tout en limitant les risques d'erreur de manipulation ainsi que l'encombrement du dispositif de verrouillage.

Selon une possibilité de l'invention, le système de verrouillage est équipé de moyens de réglage de la position du premier et/ou du second crochets.

Les moyens de réglage permettent notamment de régler la précontrainte au niveau du premier crochet. Suivant un cas particulier, le réglage de la position du second crochet par rapport au premier permet de contraindre à la fois le premier et le second crochets. Toutefois, dans ce cas, il est nécessaire de s'assurer que le second crochet n'est que faiblement selon la revendication 1. sollicité. Les efforts sont alors répartis sur les deux crochets de sorte qu'il est encore possible de réduire le dimensionnement de ceux-ci.

Préférentiellement, le système de verrouillage comporte deux crochets.

L'invention concerne en outre un aéronef, caractérisé en ce qu'il est équipé d'au moins une nacelle selon l'invention.

De toute façon, l'invention sera bien comprise à l'aide de la description qui suit en référence au dessin schématique annexe représentant, à titre d'exemple, une forme de réalisation de cette nacelle.
Figure 1 est une vue schématique d'une nacelle en coupe longitudinale ;
Figure 2 est une vue éclatée de la section arrière de la nacelle, en perspective ;
Figure 3 est une vue de face du dispositif de verrouillage selon l'invention ;
Figure 4 est une vue, en perspective, d'une partie de celui-ci ;
Figure 5 est une vue en coupe, de dessus, de la partie précitée.

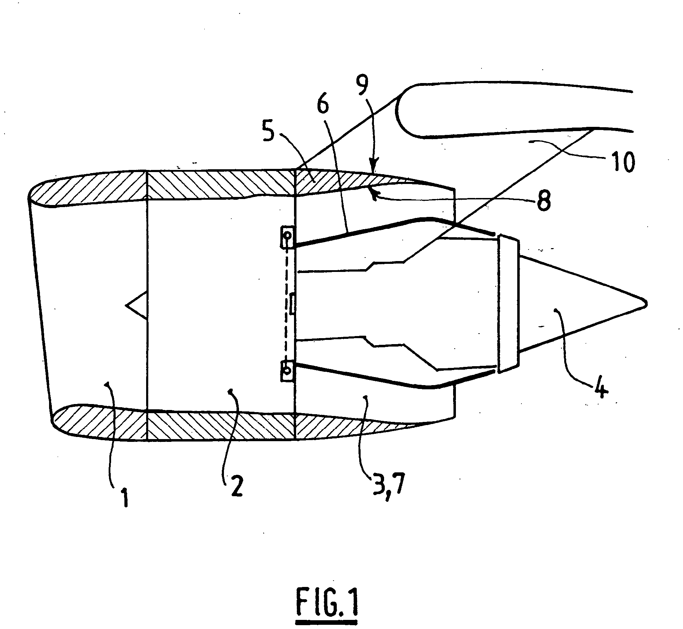

La figure 1 représente une nacelle selon l'invention, destinée à équiper un aéronef. Celle-ci présente une structure tubulaire comprenant une entrée d'air 1 en avant du turboréacteur, une section médiane 2 destinée à entourer une soufflante du turboréacteur, une section arrière 3 pouvant abriter des moyens d'inversion de poussée et destinée à entourer la chambre de combustion du turboréacteur, et est terminée par une tuyère d'éjection 4 dont la sortie est située en aval du turboréacteur.

La nacelle est destinée à abriter un turboréacteur double flux apte à générer par l'intermédiaire des pâles de la soufflante en rotation un flux d'air chaud (également appelé flux primaire) issu de la chambre de combustion du turboréacteur.

La nacelle présente une structure externe 5, dite Outer Fixed Structure (OFS), qui définit, avec une structure interne concentrique 6, dite Inner Fixed Structure (IFS), un canal annulaire d'écoulement 7, encore appelé veine, visant à canaliser un flux d'air froid, dit secondaire, qui circule à l'extérieur du turboréacteur. Les flux primaire et secondaire sont éjectés du turboréacteur par l'arrière de la nacelle.

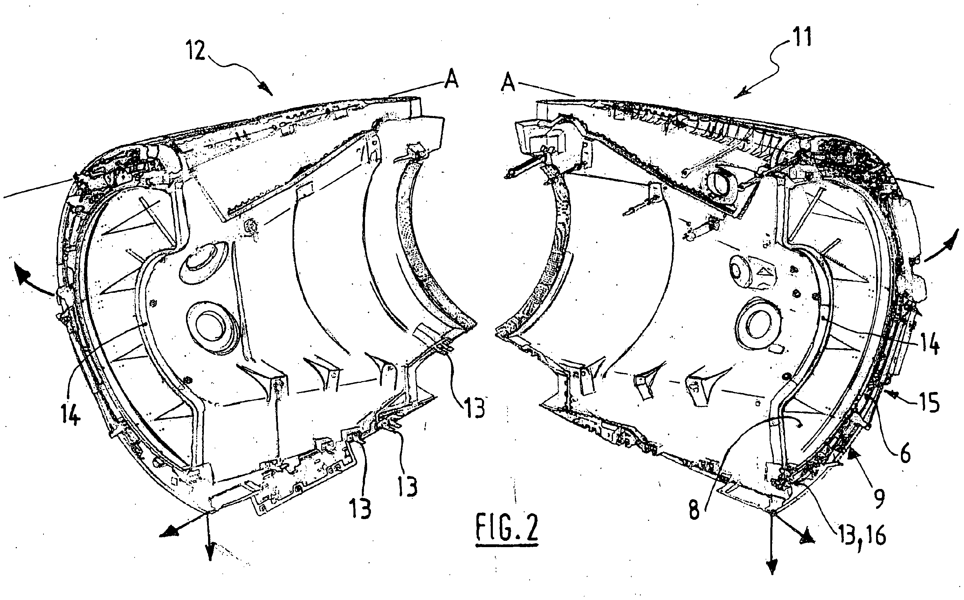

Comme cela apparaît plus particulièrement à la figure 2, la structure externe 5 comporte un capot interne 8 et un capot externe 9.

Chaque ensemble propulsif de l'aéronef est ainsi formé par une nacelle et un turboréacteur, et est suspendu à une structure fixe de l'aéronef, par exemple sous une aile ou sur le fuselage, par l'intermédiaire d'un pylône ou mât 10 rattaché au turboréacteur ou à la nacelle.

Comme cela apparaît à la figure 2, la section arrière 5 de la structure externe de la nacelle est formée d'une première et d'une deuxième demi-coquilles 11, 12 de forme sensiblement hémicylindrique, de part et d'autre d'un plan vertical longitudinal de symétrie de la nacelle, et montées mobiles de manière à pouvoir se déployer entre une position de travail et une position de maintenance en vue de donner accès au turboréacteur. Les deux demi-coquilles 11, 12 sont chacune montées pivotantes autour d'un axe A, formant charnière en partie supérieure (à 12 heures) de l'inverseur. Les demi-coquilles sont maintenues en position de fermeture au moyen de dispositifs de verrouillage 13 disposés au moins le long d'une ligne de jonction située en partie inférieure (à 6 heures).

Les sections médiane et arrière 2, 3 sont, de manière classique, reliées l'une à l'autre par un cadre fixe 14, les première et seconde demi-coquilles 11, 12 étant équipées de moyens de positionnement coopérant en position de travail avec des moyens de positionnement complémentaires ménagés au niveau du bord avant des demi-coquilles.

Comme cela est connu en soi, les moyens de positionnement comportent une nervure annulaire biseauté, de profil général en V, les moyens de positionnement complémentaires présentant une gorge de forme et de profil complémentaires.

La nervure annulaire est disposée plus particulièrement au niveau du bord avant 15 du capot interne 8 de la structure externe 5.

La nacelle est équipée d'un dispositif de verrouillage 13 comportant un système de verrouillage 16 disposé sur la première demi-coquille 11, et un organe de retenue 17, disposé sur la seconde demi-coquille 12.

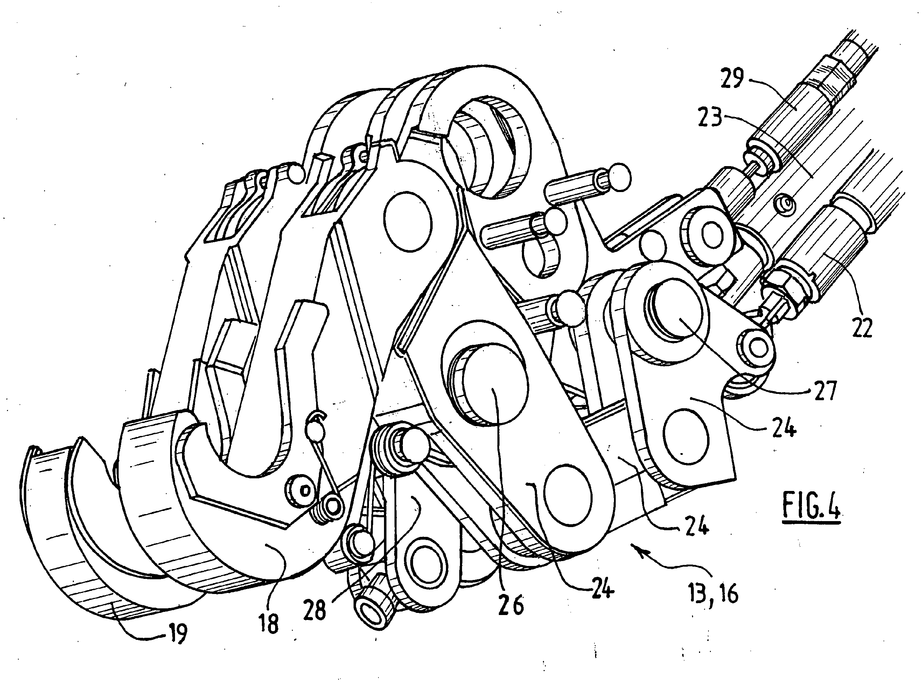

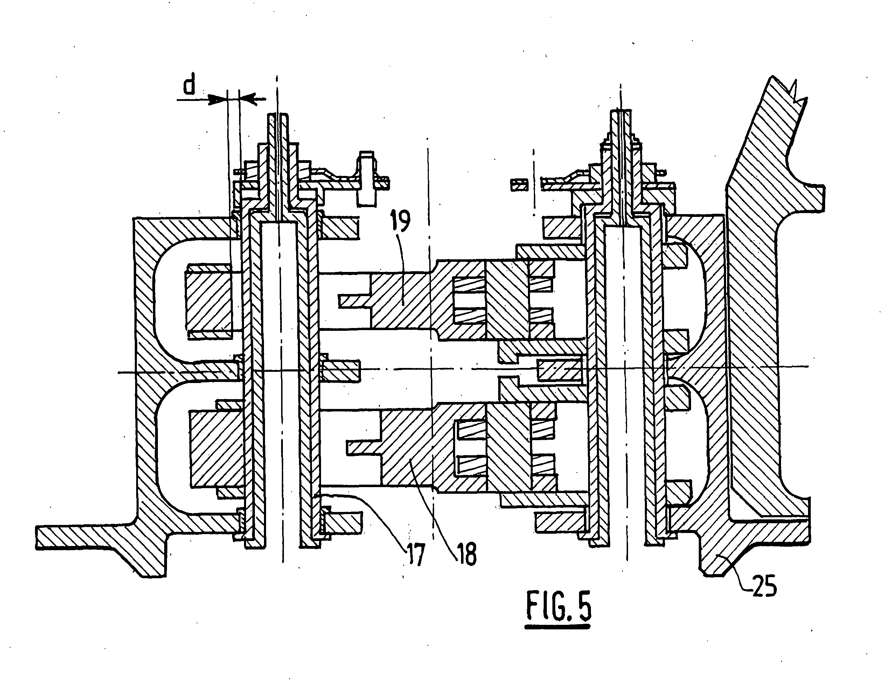

Comme cela est représenté aux figures 4 et 5, le système de verrouillage 16 comporte un premier crochet 18 conçu pour venir en prise avec l'organe de retenue 17 de manière à réaliser le verrouillage du dispositif de verrouillage, et un second crochet 19, en retrait du premier crochet 18 de manière à venir en prise avec l'organe de retenue 17 en cas de rupture du premier crochet 18.

Le décalage d entre les deux crochets 18, 19 est illustré plus particulièrement à la figure 5, dans laquelle le dispositif de verrouillage 13 est représenté en position verrouillée. Ce décalage d est compris entre 0,5 et 1,5 mm, préférentiellement de l'ordre de 1 mm. Comme cela est également représenté sur cette figure, le second crochet 19 peut être sous-dimensionné par rapport au premier 18.

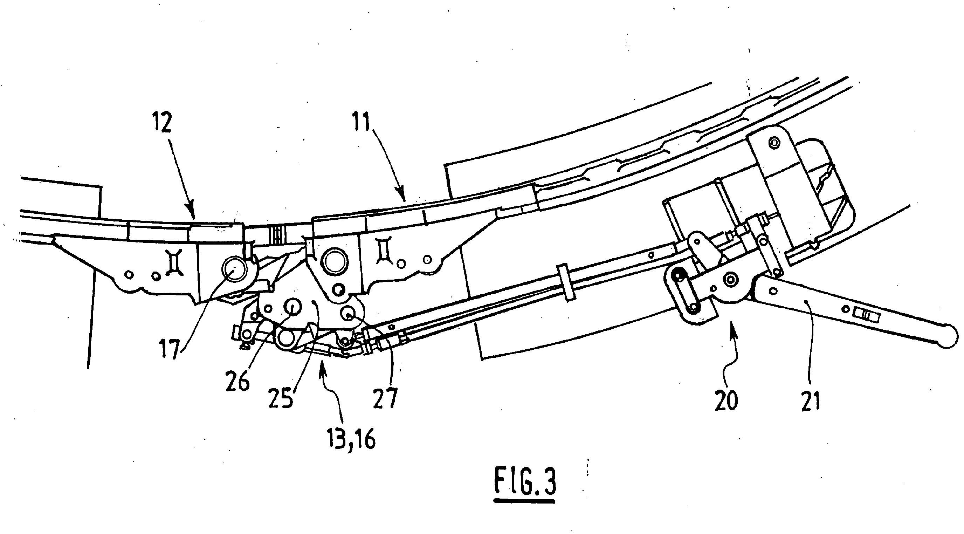

Comme représenté à la figure 3, le système de verrouillage 16 comporte des moyens d'actionnement 20 conçus pour actionner simultanément le premier et le deuxième crochets.

Ces moyens d'actionnement 20 présentent une poignée 21 accessible à un opérateur depuis le capot externe 9 de la nacelle, la poignée 21 étant reliée à deux bielles de commande 22, 23, elles-mêmes chacune reliées à un jeu de biellettes 24. Chaque jeu de biellettes 24 est relié à l'un des crochets 18, 19, les biellettes 24 étant montées articlées sur une chape 25 fixée à la première demi-coquille 11, par l'intermédiaire d'axe fixes 26, 27.

Le déplacement de la poignée 21 entraîne l'actionnement de chaque crochet 18, 19.

Le système de verrouillage 16 est en outre équipé de moyens de réglage de la position du premier et du second crochets. Les moyens de réglage comportent un élément 28 formant butée dont la position peut être ajustée par l'intermédiaire d'un câble de réglage 29. Ces moyens de réglages permettent notamment de régler la position du second crochet 19 par rapport au premier 18.

Suivant un cas particulier, la position des crochets 18, 19 peut être ajustée de sorte que en, position verrouillée du dispositif de verrouillage 13, une majeure partie de l'effort de verrouillage soit supporté par le premier crochet 18, une partie mineure de cet effort étant supporté par le second crochet 19.

Comme il va de soi l'invention ne se limite pas à la seule forme de réalisation de cette nacelle de turboréacteur, décrite ci-dessus à titre d'exemple, mais elle embrasse au contraire toutes les variantes sans sortir du cadre de l'invention définie par les revendications annexées.

## Revendications

1. Nacelle de turboréacteur, destinée à équiper un aéronef, comprenant une section avant (1) d'entrée d'air, une section médiane (2) destinée à entourer une soufflante du turboréacteur, et une section arrière (3) formée à partir d'au moins une première et une seconde demi-coquilles (11, 12) montées mobiles en rotation sur un axe (A) de manière à pouvoir se déployer chacune entre une position de travail dans laquelle les demi-coquilles (11, 12) sont rapprochées l'une de l'autre et une position de maintenance dans laquelle les demi-coquilles (11, 12) sont écartées l'une de l'autre, comprenant au moins un dispositif de verrouillage (13) comportant au moins un système de verrouillage (16), destiné à être disposé sur un premier élément mobile (11), et un organe de retenue (17), destiné à être disposé sur un second élément mobile (12), le système de verrouillage (16) comportant un premier crochet (18) conçu pour venir en prise avec l'organe de retenue (17) de manière à réaliser le verrouillage du dispositif de verrouillage (13), **caractérisée en ce que** le système de verrouillage (16) comporte au moins un deuxième crochet (19), en retrait du premier crochet (18) de manière à venir en prise avec l'organe de retenue (17) en cas de rupture du premier crochet (18).

2. Nacelle selon la revendication 1, **caractérisée en ce que** le deuxième crochet (19) est en retrait du premier (18) d'une distance (d) comprise entre 0,5 et 1,5 mm, préférentiellement de l'ordre de 1 mm.

3. Nacelle selon l'une des revendications 1 ou 2, **caractérisée en ce que** le système de verrouillage (16) comporte des moyens d'actionnement (20) conçus pour actionner simultanément le premier et le deuxième crochets (18, 19).

4. Nacelle selon l'une des revendications 1 à 3, **caractérisée en ce que** le système de verrouillage (16) est équipé de moyens de réglage (28, 29) de la position du premier et/ou du second crochets (18, 19).

5. Nacelle selon l'une des revendications 1 à 4, **caractérisée en ce que** le système de verrouillage (16) comporte deux crochets (18, 19).

6. Aéronef, **caractérisé en ce qu'**il est équipé d'au moins une nacelle selon l'une des revendications 1 à 5.

## Claims

1. A turbojet engine nacelle, intended for equipping an aircraft and comprising a front air inlet section (1), a middle section (2) intended for surrounding a blower of the turbojet engine, and a rear section (3) formed from at least one first and one second half shell (11, 12) which are mounted movably in rotation on an axis (A), so as to each be capable of being deployed between an operating position, in which the half shells (11, 12) are close to one another, and a maintenance position, in which the half shells (11, 12) are apart from one another, said nacelle comprising at least one locking device (13) comprising at least one locking system (16), intended to be arranged on a first movable element (11), and a retaining member (17), intended to be arranged on a second movable element (12), the locking system (16) comprising a first hook (18) designed to engage with the retaining member (17) so as to effect the locking of the locking device (13), **characterized in that** the locking system (16) comprises at least one second hook (19) set back from the first hook (18) so as to engage with the retaining member (17) in the event of a fracture of the first hook (18).

2. The nacelle as claimed in claim 1, **characterized in that** the second hook (19) is set back from the first (18) at a distance (d) of between 0.5 and 1.5 mm, preferably of the order of 1 mm.

3. The nacelle as claimed in either one of claims 1 and 2, **characterized in that** the locking system (16) comprises actuating means (20) designed for simultaneously actuating the first and the second hook (18, 19).

4. The nacelle as claimed in one of claims 1 to 3, **characterized in that** the locking system (16) is equipped with means (28, 29) for setting the position of the first and/or of the second hook (18, 19).

5. The nacelle as claimed in one of claims 1 to 4, **characterized in that** the locking system (16) comprises two hooks (18, 19).

6. An aircraft, **characterized in that** it is equipped with at least one nacelle as claimed in one of claims 1 to 5.

## Patentansprüche

1. Turbostrahl-Triebwerksgondel, die dazu vorgesehen ist, ein Flugzeug auszustatten, umfassend einen vorderen Abschnitt (1) zum Eintritt von Luft, einen mittleren Abschnitt (2) der dazu vorgesehen ist, ein Gebläse des Turbostrahltriebwerks zu umgeben, und einen hinteren Abschnitt (3) der auf der Grundlage von mindestens einer ersten und einer zweiten Halbschale (11, 12) gebildet ist, die rotatorisch beweglich um eine Achse (A) montiert sind, um sich jeweils zwischen einer Betriebsposition, in der die Halbschalen (11, 12) einander angenähert sind, und einer Wartungsposition, in der die Halbschalen (11, 12) voneinander entfernt sind, bewegen können, aufweisend mindestens eine Verriegelungsvorrichtung (13), die mindestens ein Verriegelungssystem (16) umfasst, das dazu vorgesehen ist, auf einem ersten beweglichen Element (11) angebracht zu werden, und ein Rückhalteorgan (17), das dazu vorgesehen ist, auf einem zweiten beweglichen Element (12) angebracht zu werden, wobei das Verriegelungssystem (16) einen ersten Haken (18) umfasst, der entworfen ist, um mit dem Rückhalteorgan (17) einzugreifen, um die Verriegelung der Verriegelungsvorrichtung (13) durchzuführen, **dadurch gekennzeichnet, dass** das Verriegelungssystem (16) mindestens einen zweiten Haken (19) umfasst, der vom ersten Haken (18) zurückgezogen ist, um mit dem Rückhalteorgan (17) für den Fall eines Bruchs des ersten Hakens (18) einzugreifen.

2. Gondel nach Anspruch 1, **dadurch gekennzeichnet, dass** der zweite Haken (19) vom ersten (18) um einen Abstand (d) zurückgesetzt ist, der zwischen 0,5 und 1,5 mm liegt, vorzugsweise im Bereich von 1 mm.

3. Gondel nach einem der Ansprüche 1 oder 2, **dadurch gekennzeichnet, dass** das Verriegelungssystem (16) Betätigungsmittel (20) umfasst, die entworfen sind, um gleichzeitig den ersten und den zweiten Haken (18, 19) zu betätigen.

4. Gondel nach einem der Ansprüche 1 bis 3, **dadurch gekennzeichnet, dass** das Verriegelungssystem (16) mit Mitteln zur Einstellung (28, 29) der Position des ersten und/oder des zweiten Hakens (18, 19) ausgestattet ist.

5. Gondel nach einem der Ansprüche 1 bis 4, **dadurch gekennzeichnet, dass** das Verriegelungssystem (16) zwei Haken (18, 19) umfasst.

6. Flugzeug, **dadurch gekennzeichnet, dass** es mindestens mit einer Gondel nach einem der Ansprüche 1 bis 5 ausgestattet ist.
